Europäisches Patentamt

European Patent Office

Office européen des brevets

(19)

(11) **EP 1 315 084 A1**

## (12) EUROPEAN PATENT APPLICATION

(43) Date of publication:
**28.05.2003 Bulletin 2003/22**

(51) Int Cl.⁷: **G06F 9/44**, G06F 17/28

(21) Application number: **01128179.7**

(22) Date of filing: **27.11.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **SUN MICROSYSTEMS, INC.**<br>**Palo Alto, California 94303 (US)** | (72) Inventor: **Jahnke, Jörg**<br>**22453 Hamburg (DE)**<br><br>(74) Representative: **Becker Kurig Straus**<br>**Patentanwälte**<br>**Bavariastrasse 7**<br>**80336 München (DE)** |

### (54) Method and apparatus for localizing software

(57) The present invention relates to the translations and means to support translators. The present invention relates to database application programs for supporting translators in translating texts and localizing software. It also relates to a translation device for supporting translators. An embodiment of a method for translating a source language text utilizes a database in which source text elements entries and respective translation entries are stored. The method is executed by searching untranslated text elements in the source language text e.g. of the source code of a software. Comparing found untranslated text element for matching source language text element entries in a database, and entering said matching translation entries of said matching source language text element entries to a pre-translation table at the location of said untranslated text element. The invention further relates to devices and programs to execute this method.

Fig.1a

## Description

<u>Field of the invention</u>

The present invention relates to database application methods and programs for localizing software, translating texts contained therein and to support translators in localizing software and translating texts. It also relates to a translation apparatus for localizing software, translating texts and supporting translators.

<u>Background of the related Art</u>

Conventional translation programs try to translate texts on a "sentence by sentence" basis. Such conventional translation programs encompass the analysis of the grammatical structure of a sentence to be translated and the transfer of it into a grammatical structure of a target language sentence, by searching for grammar pattern in the sentence to be translated. The text to be translated can also be called the source language text. This is usually done by analyzing the syntax of the sentence by searching for main and subordinate clauses and so on. For this purpose the single words of the sentence have to be analyzed for their attributes, just like the part of speech, declination, plural, case and the like. Further, conventional translation programs try to transform the grammatical form from the source language grammar to the target language grammar, to translate the single words and insert them in the transformed grammatical form. If the translation program works correctly, the translated sentence exactly represents or matches the sentence to be translated. One difficulty is that the translation of many words in the text to be translated is equivocal and represents many different words in the target language. Therefore, as long as translation programs cannot use thesauruses specifically adapted for detecting the correct semantical expressions and meaning of sentences, according to the context, machine translations are imperfect.

Another drawback of the above mentioned translation programs is that especially slang and slang grammar is not translatable, as slang uses grammar rules different from the standard grammar rules. Additionally the complex grammar rules are difficult to describe with mathematical laws and therefore require huge calculation costs even for simple sentences. Additionally, ambiguous source language sentences are especially difficult to translate into target sentences with the same ambiguous grammar structure.

Another drawback of the conventional translation programs is the fact that the translation performance is limited, and stays limited, and except of update options for the dictionaries and the grammar rules, the conventional translation programs are limited in their performance. Conventional translation programs are not adaptive, and repeat the same translation errors, as the user cannot change the grammar rules by himself without risking a total breakdown of the translation apparatus.

Another problem is connected with software localization, i.e. the adaptation of software to a certain local, geographic or linguistic environment in which it is used. Such a localization must be done with internationally available software tools in order to ensure proper function with users coming from different cultural and linguistic backgrounds. Such problem is also related to the fact that different translators work simultaneously on different aspects of a software. So e.g. one team translates the text entries in a source code of a software, another team translates the manuals, while a third team translates the "Help" files. To achieve a correct localized version of a software it is beneficial that the three teams have to use the same translations for same words so that the manuals, "Help" files, and the text elements in the software itself consistently match each other. To achieve this, the teams conventionally have to lay down the keywords and the respective translations used in the software. This is time consuming and requires a good communication between the teams.

It is desirable to have a method, program and device which is capable to translate, or support translators, in localizing software and software related texts with low calculation requirements, a reasonable exploitation of synergistic effects and the capability of consistent translation in both the software and the related text parts, such as manuals, Help files and so on.

It is further desirable to have a method, program and device which is capable to adapt the text translations of software related texts even to an unusual use of grammar and words.

It is further desirable to have a method, program and device which is capable to localize software and/or to support people in localizing software.

<u>Summary of the Invention</u>

According to an embodiment of the present invention a method for localizing software is provided. The method localizes the software by adapting the language of texts in a source code of said software by extracting text elements from the source code. Next, untranslated text elements are searched in said extracted text elements. Translation elements are retrieved for each untranslated text element, e.g. by searching a database with pre-stored matching source text elements and respective translations. The next operation is related to associating said searched untranslated element of the source language with said retrieved translation elements, if such translation elements are found.

In this embodiment of the present invention the method supports a software localizer (or user) by offering one or more possible translations of a text element contained in the source code of a software program. In this way the user can simply perceive the translation proposals retrieved from a database. The method ensures the adaptability of different software to certain cultural, geographic or linguistic environments.

In another embodiment of the present invention the method further comprises the operations of validating said retrieved translation elements, and merging said source code with said validated translation elements.

With these steps the user can easily decide if he wants to accept (validate) or discard the suggested translation. The validation of the suggested translation may be executed automatically, if the user has validated the same translation element in another section of the source code. Merging the source code with said validated translation elements, finally indicates the enlargement of the one language text elements in the source code with the validated other language(s) translation elements. The merging may be executed preferably after translation of the whole text.

In another embodiment of the present invention, the method further comprises a compiling operation to compile said merged source code to generate a localized software in binary code. This software preferably comprises one or more text libraries in languages different from the language of the original source code. The operation of compiling can be the last operation in the generation of a localized software version, dependent on the programming language. Preferably an additional operation of binding may be executed when the programming language requires the binding of submodules or sub-libraries after compilation. In this case the compiling operation is followed by one or more binding operations. Dependent on the programming language, the operation of compiling can be an assembling operation.

In another embodiment of the present invention, the method for localizing software further comprises an adaptation of the language of texts related to said software, e.g. manuals, Help files, etc. for illustrating the use of said software and supporting the user accordingly. Software is often provided with additional texts such as "Help"- files, manuals, packaging prints and the like, these texts being provided with translations matching with the translations used in the source code of the software. The translation of software related texts may be executed by the additional operations of: searching untranslated elements of the software related text, retrieving translation elements for each untranslated text element of the software related text on the basis and in accordance with the association of said retrieved source code translation elements, and associating said untranslated elements of the software related text with said retrieved translation elements. Thereby it is ensured that a consistent translation is performed within both the translation of source code texts and of software related texts.

It is to be noted that the operation of retrieving translation elements for each untranslated text element of the software related text on the basis of the association of said retrieved source code translation elements may include that said associated source code translation elements may have been previously validated, merged or even compiled, with a preference on the validated entries.

It is to be noted, that the operations of the method for localizing software and translating software related texts can be executed successively, interleavingly and/or even simultaneously. The method may be executed in a local area network (LAN), wherein different teams of translators access and/or retrieve the translation suggestion from the same table and/or dictionary and/or library and/or storage unit. To simplify the access and to standardize the translation of a software, the storage unit may be related to a single language software localization, i.e. there is one translation sub-dictionary for each language in the localized software version. This feature may be combined with a composed translation dictionary structure, so that a number of keywords are stored in and retrieved from a localization specific database, by which keywords of minimum requirements are defined. Text elements not containing said keywords can be retrieved from a common database.

According to another embodiment of the present invention a method for localizing software related texts is provided by which - dependent on or irrespective from the translation of software source code - text elements are translated. The method utilizes text elements of said software related text and their respective translations stored in a database. First, all untranslated text elements are searched in said software related text. Next, translation elements are retrieved for an untranslated text element, e.g. by searching a database with pre-stored matching source text elements and respective translations. Associating said searched untranslated element of the source language with said retrieved translation elements is done, if and after such translation elements are found.

In this embodiment of the present invention the method supports a translator by offering one or more possible translations of a source text element. The user or translator can easily decide if he wants to accept or discard the suggested translation. The main difference to conventional translation programs is that the grammar of the source text element is not checked. This is not necessary, as only the text structure of the source language has to match a previously translated text element. It is like using an analphabet for comparing a pattern (the source text element) with previously stored patterns, in a card index and attaching a respective file card (with the translation element) at the place the pattern was found in the source text. Then a translator can accept or discard the index card, instead of translating each text element by himself, thereby improving his translation speed. The performance of the pretranslation is therefore only dependent on the retrieving speed of the file card and on the size of the card index, and not on the linguistic abilities of the user performing the translation. In another embodiment of the present invention two or more users may sweep the card index the same time. Additionally, in another embodiment, the users can take newly written index cards from another user and sort them into the card index.

In an embodiment of the present invention the associating is executed by entering said retrieved translation elements into a table. The use of tables will simplify the processing of the text elements and enables the developers to use database management systems (DBMS) to realize this embodiment in a computer. The use of tables can further simplify the access of retrieved translation elements, if they are retrieved from a database.

The use and the interaction of tables in a database are well known and easy to handle tasks in databases, especially if the tables comprises pre-defined translated phrases compared to an ambiguous grammar analysis. The transfer to tables of a database offers additional benefits, as comments, markings and even translation related background information, like language code, translation code and the like can be stored in additional columns in the table. With the "patterns" stored in columns the job of users performing the translation in above example is simplified by just taking the next pattern in the column, and no longer searching for the next patch in a patchwork.

According to another embodiment of the present invention, the operation of retrieving translation elements comprises the operation of comparing each untranslated text element with entries of a dictionary database.

According to another embodiment of the present invention, the received translation element is entered in at the location of said untranslated text element or in proximity of said untranslated text element. So the translated element may replace the untranslated text element. The translated element can be placed below the untranslated element. The translated element can e.g. be entered in a field element adjacent to the field element of an untranslated text element, if a table is used for the translation method.

According to another embodiment of the present invention a translation method further comprises displaying of matching translation elements to a user, and waiting for user input indicating a validation of a specific matching translation element. The validation can be executed by a user entering a valid translation element by himself.

According to another embodiment of the present invention the translation method further comprises a operation of editing said received translation element, by user input, prior to said validation.

The user can accept or discard entries in the pretranslation table by interaction. The interaction with a user includes different advantages. First a user can decide by himself if he wants to accept the proposed entry. Second, if multiple entries are proposed the user can select the best one, or even select one of the proposed lower rated translation suggestions and adapt it to the present text to be translated. The user can choose if he wants to select one of the proposed translation elements in the pre-translation table, or if he wants to translate said text element by himself.

According to another embodiment of the present invention, the translation method comprises updating said dictionary database with said validated translation element. By updating the database with new text elements and translation entries the database is extended and improved. This extension can be executed automatically e.g. by automatically updating the dictionary database with the validation of a translation element. The updating of the database can be executed according to different procedures. In one embodiment, the database updating can be executed by transferring all validated translation elements from the user device to the database, so that the database itself can decide if that validated translation element is already stored, or is to be stored as a new translation element. In another embodiment, the updating of the database may be executed by transferring only newly generated database entries to the database. It may be noted that it may be advantageous that a user, a user device, or the database checks if a validated text element/translation element pair is already present in the database, to prevent a rising number of similar or identical entries which must be avoided. To prevent that invalid translation elements can be dragged into the translation database, the updating of the translation database may even be accomplished by an additional validation process initiated from a second translator. The second validation can easily be executed, as the translator for the second validation only has to decide if a translation element matches the respective text element or not. It can also be possible to discard certain translation proposals as invalid by a user input, to prevent that the system offers this translation element a second time. This feature can be embodied as a "negative key ID"- entry in a certain column of the translation table.

According to another embodiment of the present invention, an index is generated in an additional operation indicating the grade of conformity of an element of the text and of the dictionary database. This index is useful, if the text element to be translated and the text entries stored in the database differ only slightly, so that a translator may easily derive a correct translation from a slightly different database entry. The depiction of an index describing the matching of an untranslated text element and a translated text element can be described as fuzzy matches. The generated index may be described as a "fuzziness" index of the matching element.

According to a further embodiment of the present invention, the number of entries in the said pretranslation table of one text element is related to the grade of matching. The number of matching translations to be retrieved from the translation database has not been limited until now, so that more than one matching entry of the database may be retrieved. If more than one entry can be found, the number of retrieved entries may be limited to a predetermined value of the matching grade index. Alternatively, the number of retrieved database entries could be limited by a predetermined value. Both limits prevent that a human translator has to face a too big number of translation proposals. The number of translation proposals can be limited by a predetermined value e.g. of the matching index. If the predetermined matching index is set to zero, the user in the above example would retrieve the whole database for each source text element in the table.

In another embodiment of the present invention, a translation entry of the source language text element entry is accepted as valid translation automatically, if said index indicates an exact match of said untranslated text element with said source language text element entry. This option automates the above mentioned translation support method to an automatic translator for text elements with exactly matching database entries. This automatic translation method may even economize the translator, if the texts to be translated are limited to a small lingual field combined with a huge database. Huge databases suggest a centralized use of the translation method in computer networks such as local area networks or the internet. This would enable a fast generation of a huge universal translation database, if any net user can access the database for translation tasks improving the database with each accepted translation. To prevent abuse of the database the entries may be marked as authorized by the translators of the provider.

According to a further embodiment of the present invention, the method comprises a marking operation of translated or untranslated or partially translated text elements. The markings can be used to indicate the status of the translation, distinguishing between different grades of translations e.g. fully, partially, or untranslated. The makings may be incorporated in the text, or may be added in a separate column into the translation table. The makings can be used to indicate if the specific table entry has been translated by a translator, or is an automatically generated proposal, and the like. The markings are especially useful, if the front-end used by the translator depicts the table entries as a conventional text without a visible table structure. The markings can be colored text, colored background, bold or oblique depiction of the text, bold or colored tables or frames and the like.

Markings of the table entries may indicate e.g. a number of how often this database entry has been used or has been accepted by a translator. The markings may indicate e.g. the differences between the translation suggestion and the actual text, to simplify the work of the translator. The marking may mark a single word differing in the database entry and in the translation. The marking may indicate the quality of the suggested translation. The marking may even indicate the similarity to pre-translated database entries, so the user may recognize if the user selected an unusual grammar or word translation. A marking can be applied to the source text, indicating a grammar structure, so that e.g. the main clause is marked with one color and the subordinate clauses in another color. Or the flexion of subordinate clauses to words in the main sentences may be indicated.

According to another embodiment of the present invention, the text elements are texts. Whole texts or text sections or paragraphs include the advantage of fast translation if such a paragraph can be found in the database. The expected drawback, that whole texts stored in a database would exceed the limits of any database can be ignored, as most translations especially of technical texts or of letters include few but very similar text sections. These sections can be e.g. addresses, warranties, terms, "Help" files, conditions of trade and the like.

According to a further embodiment of the present invention, the text elements are sentences. The text elements can be whole sentences or main and subordinate clauses, or simply phrases, depending on the selection of the single text element. The longer the text element is the better the translation can be expected to be, and the bigger the related database is. It could be expected that the sentence is an ideal text element, and this is the shortest logically independent language unit. The use of main and subordinate clauses may be used especially in translations from English to Japanese or from French to German to simplify the correct use of pronouns and reflexives.

In another embodiment of the present invention, the text elements are words. This would be easy to implement even in relatively small databases, for supporting a translator in translating a text by providing the translations of the single words of a sentence in the source language text. Even big translation dictionaries can be stored in relative small storage mediums. The person using this feature only has to select the correct translation of the proposed word translation and adapt the grammar of the source language to the target language, thereby rendering the use of dictionaries obsolete. The dictionary function can be combined with the above mentioned index feature, indicating how often a special translation has been selected.

It is to be noted that the single text elements could be stored in any logical form in the database. For example a text may be present as a tuple of key identification numbers of sentences, and/or the texts and sentences may be present as a tuple of key identification numbers of words and/or grammar reference. The texts, words and/or may be present as single texts in the database. The structure of the conceptual level or the internal level of the database is not important for the method.

According to another embodiment of the present invention, the various above mentioned text elements are combined to a single translation method. In this method the database is first searched for text sections, then for sentences and finally for words. The three searches may be executed successively with or without intermediate user interactions. In the first case the user first checks the suggested text sections, then the computer searches for translations of sentences, to be checked by the user and finally, searches for single words to be finally checked by the user. The computer may successively check the three hierarchic levels of text elements, preferably only continuing in a lower hierarchic level if no suggestion has been found in the higher hierarchic level, leading to a mix of suggested text section-, sentence- and word translations. To clarify such a mix of suggestions a front-end of the translation support program may mark the hierarchic level of the suggested translation. It can be compared with cutting down a groove: You can first cut all trees, then cut all branches, or you could cut down each tree, cut its branches, cut down the next tree, and so on. Equally the translation program may first compare all text sections with the database, then all sentences, and next all words, or may compare a text section, next compare all sentences of said text section, if the text section could not be found in the database, continuing by checking the database for all sentences in that text section, and continuing by searching all words in the database of sentences that could not be found in the database. The search for text sections or for words may be economized. With these combined features a translator can easily utilize a database to generate a pretranslation simply and fast relieving him of the duty to thumb dictionaries and grammar books for translating.

According to another embodiment of the invention a method for localizing software, translating texts, or supporting the translation of texts, further comprises processing of text elements and translated text elements stored in said database. The processing can be a preprocessing to transfer an arbitrary source text to a database table, including such operations as converting different text files to a file format used in the database to simplify the retrieving of matching database entries. Similarly, a translated text in the database can easily be transformed to an arbitrary file format. The transfer of the text to a table requires splitting the source text to single text elements. The processing can be a post processing e.g. by applying statistics to extract translation rules. By means of statistics, analyzing e.g. the behavior pattern of a user, a translation device may be enabled to translate sentences by itself. So the method may comprise analyzing the user input, on a certain difference patterns, of source text and database entries, enabling the method to generate translation suggestions assembled from database entries and user input patterns. The method may further comprise transferring operations texts to and from a database. This offers multiple and useful options. With this option the pretranslation of the source code text can be simplified as the source code text can be entered as text elements in a database compatible form, i.e. a table.

According to another embodiment of the present invention, a method for localizing software, translating or supporting translations further comprises the operation of sorting said text elements. A sorting operation could be performed prior or posterior to the generation of translation suggestions. So, a user may sort the text elements e.g. of the source text in an alphabetic order, sort the source text for certain "keywords", and the like. A special application of a sorting operation can be to sort the sentences according to grammar structures, the length of sentences or the number of words or characters used in a sentence. By sorting grammar structures, the method can be used to simplify the translation and the use of the method. The simplification resides in the fact that the translator starts e.g. with simple grammar structures working himself through to the complex grammar structures. This enables a user to practice with simple sentences to be prepared for complex sentences. The user may adapt the order of the sorting e. g. by transferring a text element to the end of a sequence in the order.

According to another embodiment of the present invention a software tool for enabling and/or supporting a user in translating of texts or localizing of software is provided. The software tool comprises program code portions for carrying out the operations of the above mentioned methods, when said program is implemented in a computer program. The software tool can be implemented e.g. in a database management program (DBMS) to offer the user additional translation features. The software tool can be implemented into a translation program to offer a combination of the features from conventional features and features according to the present invention. The combination of a conventional translation program and a program according to the present invention would enable a user to use an intelligent and adaptive translation program, the performance of which increases with the number of translated sentences. A combination of a conventional translation program and an embodiment of the present invention may utilize an additional grammar filter, to check e.g. the source text and the user input to prevent errors in the translation, and to improve the quality of a translation by marking the translated passage in the text with an "equivocal source text"- mark.

According to another embodiment of the present invention a computer program for enabling and/ or supporting a user to translate texts from a source language or localizing software by means of a database, comprises program code section for carrying out the above operations of the above methods when said program is run on a computer or a network device.

According to a further embodiment of the present invention a computer program product is provided comprising program code sections stored on a computer readable medium. The computer program code sections are for carrying out the above mentioned translation and software localization method when said program product is run on a computer or network device.

According to yet another embodiment of the present invention a computer device for executing software localization, translation or translation support tasks is provided. The computer device is programmed for carrying out the above mentioned translation methods. Said computer device could be a network connected in and an output device transferring source language texts via a network to a centralized translation database. This computer device can be a database device for translation purposes. The device may be equipped with a scanner.

According to another embodiment of the present invention an apparatus for localizing software by adapting the language of text contained in a source code of the software is provided. The apparatus comprises a component for extracting text elements from the source code, a component for searching untranslated elements of the extracted text elements, a component for retrieving translation elements for each untranslated text element and a component for associating the untranslated elements of the source code with the retrieved elements. The component for retrieving translation elements may be a component for searching translation elements within a database with pre-stored matching source text elements and respective translations. The component for associating the searched untranslated element of the source language with the retrieved translation elements is operated if such translation elements are found. Otherwise the searching operation is continued or the user is informed.

According to another embodiment of the present innovation an apparatus for localizing software related text by adapting the language of the text is provided. The apparatus comprises a component for searching untranslated elements of the extracted text elements, a component for retrieving translation elements for each untranslated text element and a component for associating the untranslated elements of the source code with the retrieved elements. The component for retrieving translation elements may be a component for searching translation elements within a database with pre-stored matching source text elements and respective translations. The component for associating the searched untranslated element of the source language with the retrieved translation elements is operated if such translation elements are found.

According to another embodiment of the present invention an apparatus for translating texts elements by means of a database, comprises:

- a module to communicate with said database,
- an interface for exchanging data,
- a processing device for retrieving elements from said database.

According to another embodiment of the present invention the apparatus further comprises a dictionary database.

The apparatus can be a network device communicating via said network with a database and a user or terminal device for user input. The apparatus can comprise a built-in or an external database. The apparatus can be a network device, a terminal device, an independently operable user translator. An independently operable user translator may comprise a scanner to simplify the transfer of the source text to the translator. The scanner may be able to perform screenshots of a user device, so that a user may be able to translate sentences depicted on a computer or television monitor. This would offer e.g. an "instantaneous subtitle translator" for the use with a TV.

The dictionary database provided can contain the data of a sentence based dictionary. The database, especially a database containing a sentence based translation dictionary can be applied in translation devices, or to extend the abilities of an existing conventional translation device.

The apparatus can be a sentence based dictionary for translation purposes. The difference to conventional dictionaries is that the translated units are not words and but whole sentences. It is apparent that such a dictionary, if printed as a conventional book may be larger than the "encyclopedia Britannica" and could appear a bit bulky, but would require only a single access per sentence, without the need of checking the grammar. The dictionary is incorporated in an electronic book, simplifying the access, and reducing the weight and improving the user interface of the dictionary. Said electronic dictionary may even comprise a scanner for simplified source language text input.

Another embodiment of the present invention provides a network system for enabling and/or supporting at least one user to localize software by translating texts in said software by means of a database. The network system comprises at least one of the aforementioned translation or software localization apparatuses, and at least one translation database for exchanging data with said at least one apparatus. The software to be localized can be transferred to the apparatuses via the network, too.

Description of the Drawings.

Figure 1a depicts a flowchart of a software localization method according to one embodiment of the present invention.

Figure 1b shows a block diagram illustrating an embodiment of an apparatus for localizing software.

Figure 2 shows a flowchart of a software localization and related text translation method according to one embodiment of the present invention.

Figure 3a depicts a flow chart of a translation method according to one embodiment of the present invention.

Figure 3b shows a block diagram illustrating an embodiment of an apparatus for translating elements of a source language text.

Figure 4 depicts a flow chart of a translation method according to another embodiment of the present invention.

Figure 5 depicts a flow chart of a dictionary database updating method according to an embodiment of the present invention.

Figure 6 depicts a section of a database translation table for the use in the above mentioned embodiment for a translation method.

Figure 7a depicts a number of user interaction interfaces according to an embodiment of the present invention.

Figure 7b illustrates a schematically flow diagram according to the user interaction shown in figure 7a.

Figure 8a depicts a number of user interaction interfaces according to another embodiment of the present invention.

Figure 8b illustrates a schematically flow diagram according to the user interaction shown in figure 8a.

Figure 9 depicts an apparatus for translating texts elements according to another embodiment of the present invention.

Figure 10 depicts a sentence based electronic translation dictionary according to another embodiment of the present invention.

Figure 11 depicts a network system to be used for software localization according to another embodiment of the present invention.

Detailed Description of the Drawings

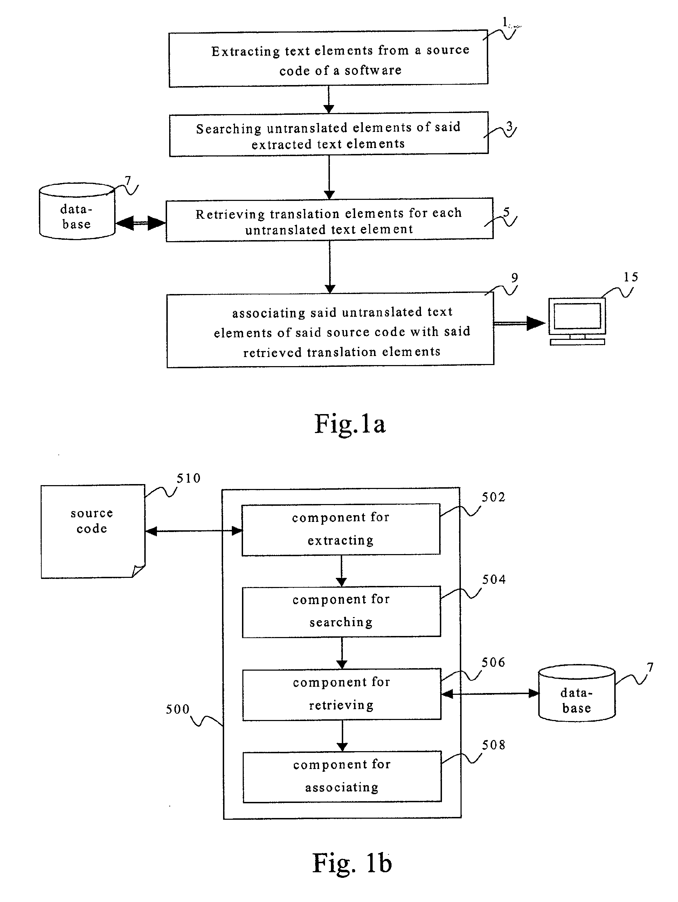

Figure 1a shows a flowchart according to one embodiment of the present invention. There are shown the operations of a method for localizing software by changing, adapting or translating the language in a source code of said software, e.g. by translation, wherein the method comprises:

- extracting text elements from said source code of said software, in operation 1;
- searching untranslated elements of said extracted text elements, in operation 3;
- retrieving translation elements for each untranslated text element, in operation 5;
- associating said untranslated elements of the source code with said retrieved translation elements, in operation 9;

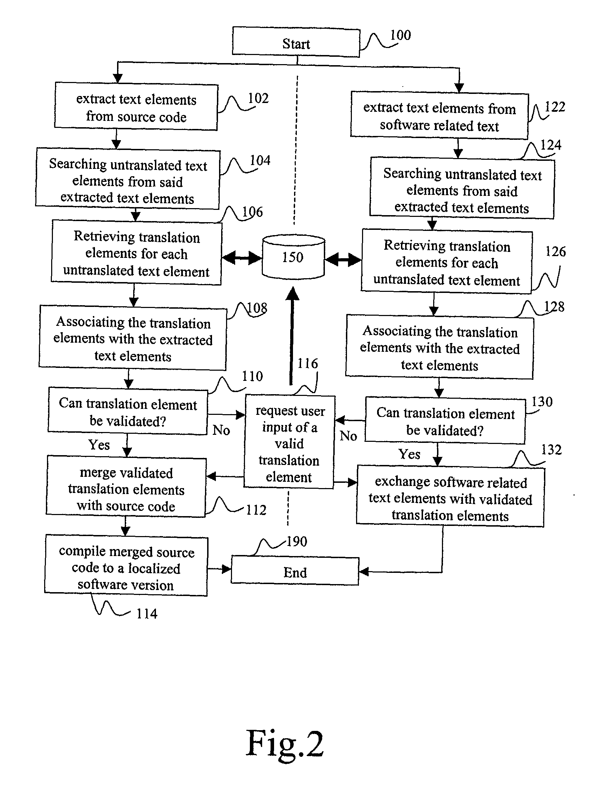

In this basic method, the translation elements can be retrieved from a database 7. The associated untranslated elements and the translation elements can then be transferred to a user interface to be displayed on a screen 15. This basic method for translating texts can be extended to the method described in figure 2.

Figure 1b shows a block diagram illustrating an embodiment of an apparatus for localizing software by changing, adapting or translating the language in a source code of software, e.g. by translation.

The apparatus 500 comprises a component for extracting 502 text elements from a source code 510 of the software. The component for extracting 502 may be constituted by a data processing device or a program section executed at a processing device. Moreover, the component for extraction 502 may be realized by a code section containing instructions for extracting. The text elements may be extracted from the source code of the software according to the operation 1 shown in figure 1a.

Further, the apparatus 500 comprises a component for searching 504 untranslated elements of the extracted text elements. The component for searching 504 may be constituted by a data processing device or a program section executed at a processing device. Moreover, the component for searching 504 may realized by a code section containing instructions for extracting. The untranslated elements of the extracted text elements may be searched according to operation 3 shown in figure 1a.

Further, the apparatus 500 comprises a component for retrieving 506 translation elements for each untranslated text element. The component for retrieving 506 may be constituted by a data processing device or a program section executed at a processing device. Moreover, the component for retrieving 506 may realized by a code section containing instructions for extracting. The translation elements can be retrieved from a database 7. The translation elements may be retrieved for each untranslated text element according to operation 5 shown in figure 1a.

Further, the apparatus 500 comprises a component for associating 508 the untranslated elements of the source code with the retrieved translation elements. The component for associating 508 may be constituted by a data processing device or a program section executed at a processing device. Moreover, the component for associating 508 may be realized by a code section containing instructions for extracting. Untranslated elements of the source code may be associated with the retrieved translation elements according to operation 9 shown in figure 1a.

Figure 2 depicts a flowchart of a software localization and related text translation method according to an embodiment of the present invention. In the figure the method is divided by a dotted line separating a branch 102 to 114 describing the localization of the software from a branch 122 to 132 describing the translation of software related texts. The method depicted in figure 2 starts with a start element 100. The start element provides the presence of a software source code and or a software related text. As described in figure 1a, both branches start with an extraction operation 102, 122 to extract text elements from the source code and/or from software related text. In a next operation said extracted text elements are searched for untranslated text elements in the operations 104, 124. In the next operations 106, 126 translation elements are retrieved for each untranslated text element from a database 150. Both branches, can access the same database 150 to retrieve the translation elements. Accessing the same database comprises the advantage that both translations are based on the same set of keyword translations. It can therefore be prevented that the manual describing an icon calls it e.g. "Memory" while the same icon in the user interface of the software is called "Storage". So this method for localizing software prevents the occurrence of inconsistencies between e.g. the software and the manuals. The same unambiguous expressions are used for denominating the same notions.

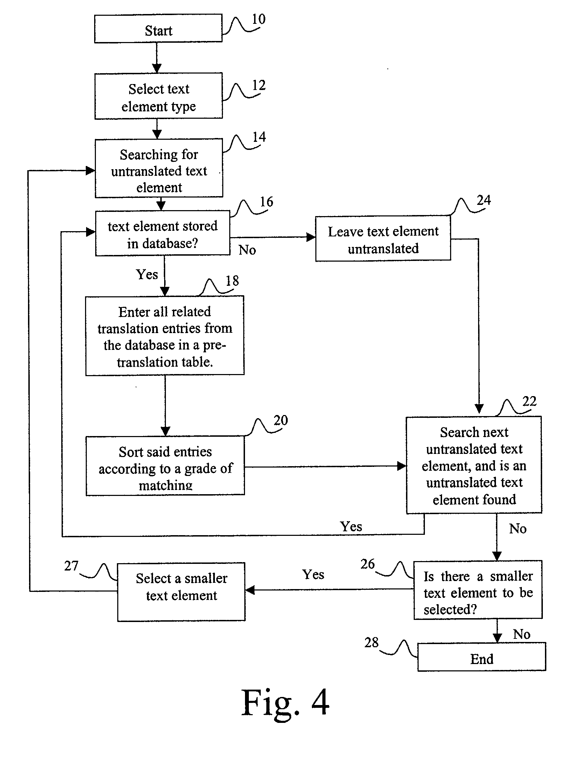

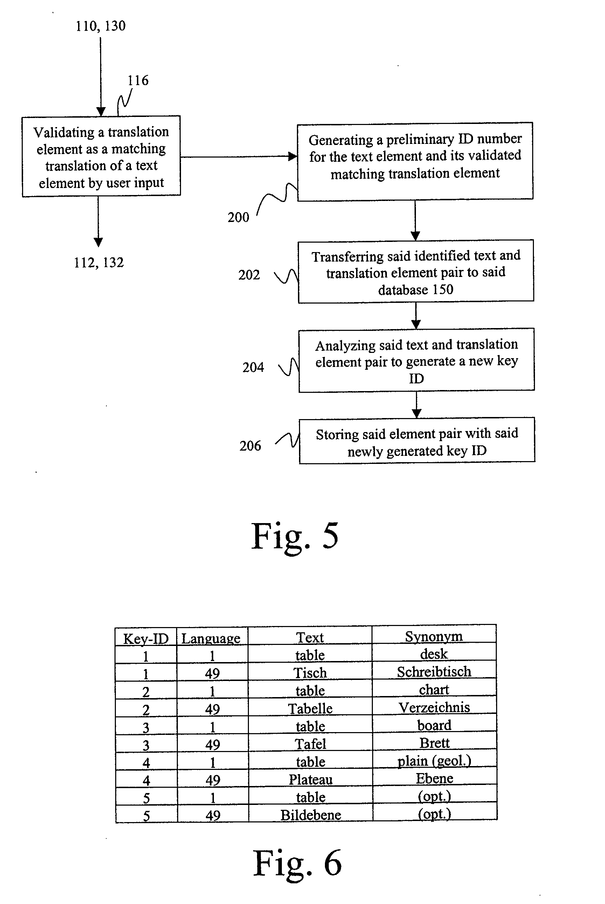

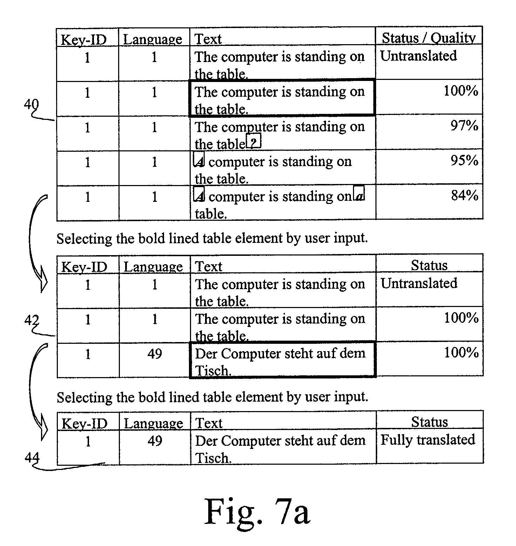

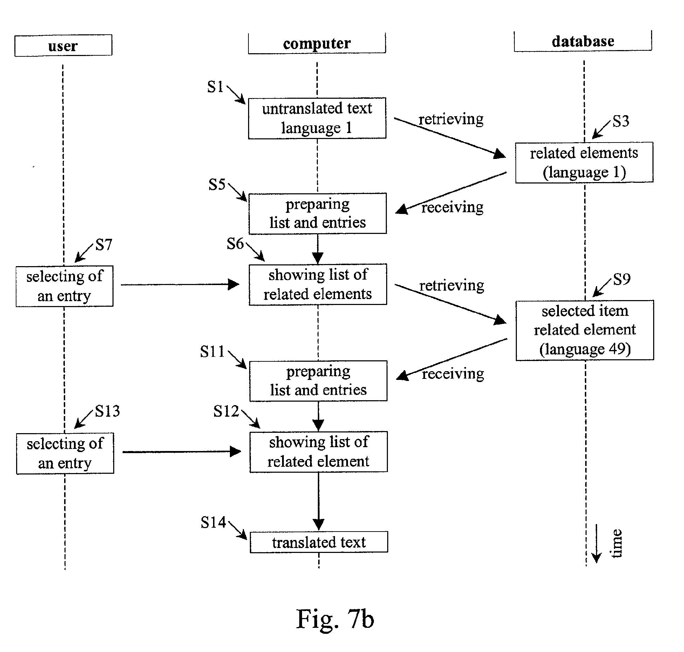

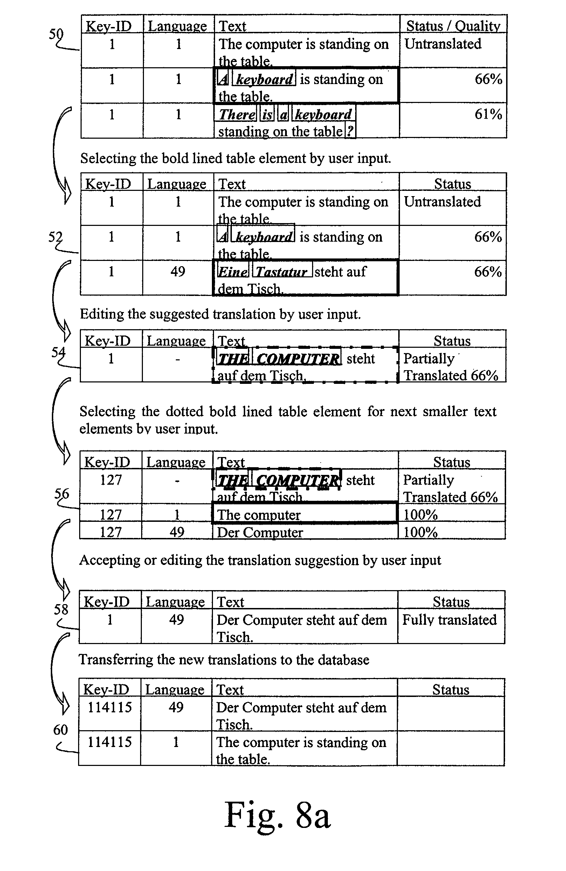

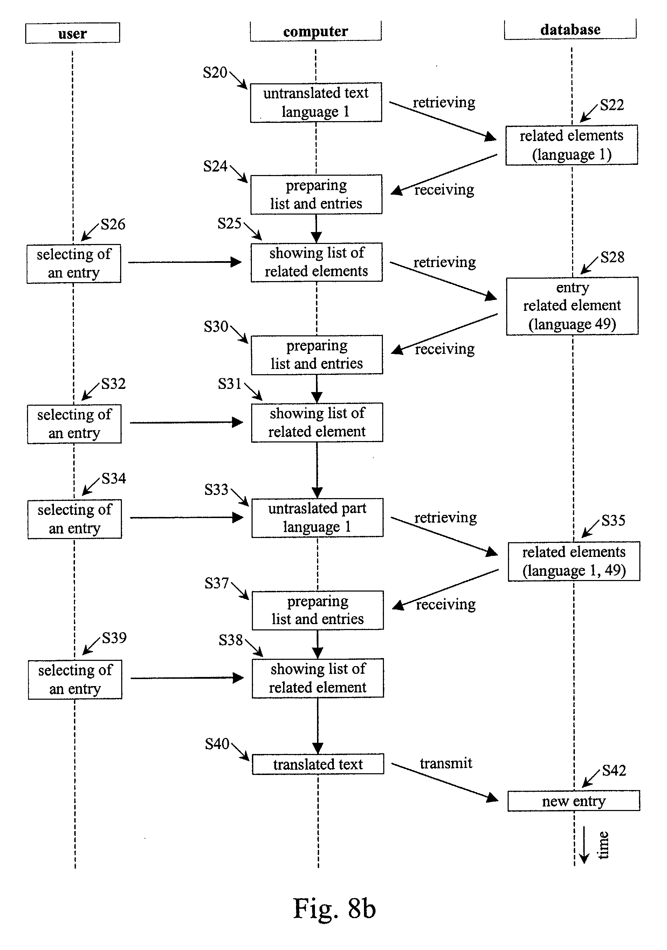

The operations 108, 128 describe the association of the text elements and the translation elements. As described in the following, this may include the use of pre-translation tables as depicted in the figures 7a, 7b, 8a and 8b. It is to be noted that the software source code translation and the software related text translation may be executed with the same or with different translation tables. The operations 110, 130 describe a validation of translation elements. The validation may be executed automatically (or manually by user input). If none of the proposed translation elements can be validated, the method requests a user input of a valid translation element, in operation 116. With the user input of a valid translation, the method can access a new pair of translation elements, that may be utilized in the translation of the other branch. This updating (depicted as the arrow between operation 116 and the database 150) results in a growing database 150, with an increasing number of entries and an increasing precision of the translation proposals. One possible updating procedure is depicted in figure 5. It should further be noted that the method of both of the branches may be executed in an interleaving fashion, as above described e.g. in the description of figure 4.

It should further be noted that the temporal distribution of the execution of the operations of the present invention is not important. Therefore, the flowchart may be executed by first localizing the software, and then translating the software related texts, wherein the translation of the texts is determined by the translations previously used for the localization. The flowchart may also be executed by first translating the software related texts, and then localizing the software, wherein the localization of the software is determined by the translation previously used for translating the software related texts. The flowchart may also be executed by simultaneously translating the software related texts and localizing the software, wherein the first validation of a translation element determines the following translations. This embodiment of the present invention enables two teams to work simultaneously on localizing a software and its manuals, economizing the operations of determining a translation catalogue of key words.

If all translation elements are valid, these are merged (in the first branch) with the source code of the software in operation 112, and the source code of the software is compiled (or assembled) to a localized software version in operation 114. If all translation elements are valid in the second branch they are exchanged with the related text elements of the software related text in operation 132. Then the localization of the software is terminated in operation 190.

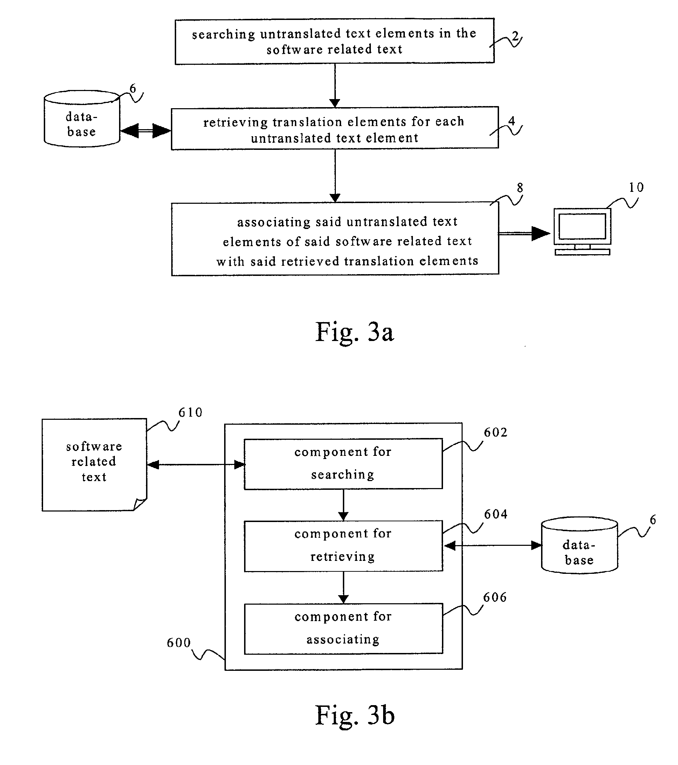

Figure 3a shows a flowchart according to one embodiment of the present invention. There are shown the operations of a method for translating elements of a source language text, wherein the method comprises

- searching untranslated elements of the source language text in operation 2,searching untranslated elements of the source language text in operation 2,
- retrieving translation elements for each untranslated text element in operation 4,
- associating said searched untranslated elements of the source language with said retrieved translation elements in operation 8.

In this basic method, the translation elements can be retrieved from a storage unit 6. The associated untranslated elements and the translation elements can then be transferred to a user interface to be displayed on a screen 10. This basic method for translating texts can be extended to the method described in figure 4. To extend this method to a software localizing method, the storage unit 6 may have been previously fed with different keyword translations from a software localization, and can be used to translate e.g. manuals and the like.

Figure 3b shows a block diagram illustrating an embodiment of an apparatus for translating elements of a source language text.

Further, the apparatus 600 comprises a component for searching 602 untranslated elements of the software related text 610. The component for searching 602 may be constituted by a data processing device or a program section executed at a processing device. Moreover, the component for searching 602 may realized by a code section containing instructions for extracting. Untranslated elements of the source language text may be searched according to operation 2 shown in figure 3a.

Further, the apparatus 600 comprises a component for retrieving 604 translation elements for each untranslated text element. The component for retrieving 604 may be constituted by a data processing device or a program section executed at a processing device. Moreover, the component for retrieving 604 may realized by a code section containing instructions for extracting. Translation elements for each untranslated text element may be retrieved from a database 6 according to operation 4 shown in figure 3a.

Further, the apparatus 600 comprises a component for associating 606 the untranslated elements of the source code with the retrieved translation elements. The component for associating 606 may be constituted by a data processing device or a program section executed at a processing device. Moreover, the component for associating 606 may be realized by a code section containing instructions for extracting. The searched untranslated elements of the source language may be associated with the retrieved translation elements according to operation 8 shown in figure 3a.

Figure 4 is a flowchart according to another embodiment of the present invention. The start box 10 of the flowchart presumes the presence of a source language text, a database with stored source language text elements and related translated target text elements, and that the source and the target language are already entered. At a operation 12 the system program or a user selects the type of text element which the present source language text has to be split into. The text element can be any language or text unit, like text sections, sentences, words and the like. After the splitting of the source text into text elements, the text elements are entered in fields of a translation table (see figure 6). Then an untranslated source text element is searched in operation 14, followed by checking the database for a matching source text elements in operation 16. If such a matching text element can't be found, the text element stays untranslated and a respective field in the pretranslation table stays empty or was marked with an "untranslatable " mark in operation 24, and the system searches for the next untranslated source text element in operation 22.

If a matching text element can be found in the database, the system copies the related translation to a pretranslation field in the translation table in operation 18. The text elements stored in the database can be exact matches or fuzzy matches. An exact match means that the source text element and the database text element are identical. A fuzzy match means that the source text element and the database text element only differ in one or a few words or punctuation marks. Fuzzy matches can be marked with an index indicating the fuzziness of the match, i.e. the quality of the match. In both cases the related translations where copied to a pre translation table. In the case of fuzzy matches or in the case of more than one exact match, the pretranslation table entries may be sorted e.g. for their matching quality, to prevent that a user wastes time searching for the best match. More than one translation of a single entry can be possible as translations of single words can be equivocal, and so the translation of whole sentences are equivocal, too. In the next operation 22, the method searches for the next untranslated source text element. If a next text element can be found, the method returns to operation 16, to loop operations 16 to 22, until a next text element can not be found.

If the system cannot find a next source text element, the method requests if the actual text element is the smallest text element available in operation 26. If the actual text element is not the smallest available, the method selects a smaller text element in operation 27 and the method returns to operation 14, to loop operations 16 to 24, until no next smaller text element could be found. If no smaller text element can be found the translation is terminated in operation 28.

Figure 5 depicts a flowchart of a dictionary database updating method according to another embodiment of the present invention. The flowchart represents an detailed execution example of the arrow between the element 116 and the database 150 in figure 2. As this figure is related to figure 2, the element 116 is depicted as used in figure 2. In figure 2 the element is located between the operations 110, 130 and the operations 112, 132. These connections are indicated with the two arrows and the respective reference numerals. The validating operation 116 leads to a new validated pair of a text element and a respective translation element. To increase the translation database 150, the two elements are provided with a preliminary key identification number (key ID), in operation 200. The pair of elements is transferred to said database 150 in operation 202. The database analyzes both elements to generate a new key ID, in operation 204. Finally, the text element and the translation element are stored, in operation 206. With a new entry stored in database 150, the translation database is growing and enables the database to increase the grade of matching of retrieved translation elements.

It should be noted that the preliminary key ID may be cancelled or economized, if the database itself can generate a key ID. It should further be noted, that the operations of updating the database may only comprise the updating of, e.g. statistical information. The database may only be informed about the number indicating how often a known translation element has been used to translate a certain text element. The statistical information may increase the efficiency to provide e.g. a translation program with an improved standard database.

Figure 6 depicts a section of a translation table for the use in the above mentioned embodiment for a translation method. The first tree columns of the depicted translation table represent the minimum required information for a translation table. The depicted table contains four columns: In the first column the table contains a key identification (ID), to identify the entry in the translation table. The key ID can be a single key, or a main ID with attached sub-IDs. The second column contains language IDs. The language IDs has information about the used language, and can be represented e.g. as in the present table by the characterizing numbers of the telephone area code. The language ID can be a single key, or a main ID with attached sub-IDs, indicating, e.g. dialects. The third column of the table contains text elements (words) in the different languages. One problem with translations is that synonyms lead to equivocal translations. To simplify the work of the user the table may contain a fourth column, providing additional information about how to use the present word. The fourth column can contain e.g. synonyms or background information of the table entry in the third column.

It may be noted that the different keyword may comprise different columns with different ID numbers (not shown). Different columns can e.g. contain the sorting index in the language of the word, for sorting the text element entries according to different sorting rules, like alphabetic, number of characters, grammar information and the like. To simplify this, additional columns can contain information related e.g. to the actual software number, to enable the users of the system to distinguish if a translation is validated for the present software localization or has been validated for another software localization. The table may further comprise different columns to relate the present entry to different other languages, so that only one table with n-1 additional columns is needed for each language, to provide translations between all n languages. Instead of $n \cdot (n-1)$ tables to connect each language with every other, another possible table structure with single tables for each language and a central (e.g. n-dimensional) relation matrix (or tensor) would enable the method to use transitive translations. So if a text element never has been translated from a first language to a third language, the system may detect that the text element has been already validated in a translation to a second language, and has been validated in a translation from said second language to said third language, the system may be able to derive a translation proposal via said second language. The present invention may also utilize a object oriented database structure for the dictionary database.

It should further be noted that the translation table can further comprise information about the origin of the text or the translation, if the software localization system supports translation specific keyword databases.

Figure 7a depicts three user interaction interfaces ("screenshots") according to an embodiment of the present invention. Figure 7a shows an example of how the present invention may be embodied on a computer device. The first screenshot 40 shows a computer program or device depicting all found matches down to a matching of 84%. The screenshot 40 comprises four columns. The first column represents a key ID of the text element (sentence) in the text. The second column represents the language ID of the text element entry. The third column represents the database text elements entries. To simplify the decision which of the pretranslation table entries matching the source text element most, are shown in the source language, and therefore all entries in the language column are all "1". The fourth column can represent two kinds of information. In the case of a source text element the fourth column represents a status. The status of the source text element in the first line and third column of screenshot 40 is "untranslated". In the case of pretranslation entries (line 2 to 5) the fourth column represents a "Quality" value, indicating how exact the source language entry (line 2 to 5) in the pretranslation table matches the source text element (in line 1). The depicted percentage values may be determined e.g. according to the formula: $x = \frac{b_{common}}{a_{ste}} \cdot 100$, wherein $a_{ste}$ represents the number of characters of the source text element and $b_{common}$ represents the number characters common and common in sequence to the source text element and the source language database entry.

To simplify the use of the method the differing characters are depicted bold, italic and are surrounded with a box. Other markings of the differences can be applied equally. In screenshot 40 the field in the third column, second line is surrounded by a bold line to indicate that this translation suggestion is marked. With a user input the user may select the surrounded translation suggestion, e.g. by a "mouseclick" an "enter" or a contact with a touch screen.

With the selection the displayed table changes to screenshot 42: all unselected translations suggestions are deleted from the screen, and the third line of the table contains the translation of the database entry. Therefore, line 3 column 1 contain the same key ID as the other two lines, and line 3 column 2 contain the language ID of the target language. Line 3 column 3 contain the translation of the source language database entry, and the column 4 indicate an exact match of the source text element and the source language database entry. The translation suggestion is marked with a bold frame to indicate that the translation suggestion is selected.

With a second user input the depicted table changes to table 44. Only containing one line: In the first field, the key ID of the source text element, in the second field the language ID, in the third field the translated text element, and finally in the fourth field the status indicating "fully translated".

This is only given by way of a non limiting example. So the first two columns of the tables 40, 42, 44 may be economized. The makings may be different. The above described method may even skip the screenshot 42, if the quality of the selected suggestion is 100%.

Figure 7b illustrates schematically a flow diagram according to the user interaction shown in figure 7a. The untranslated text may be the same as shown in figure 7a and references to figure 7a will be made in order to complete the flow diagram of figure 7b. Figure 7b illustrates the operations of the user iterative interface with respect to the example presented in figure 7a.

In an operation S1, an untranslated text may be processed. The text may be "The computer is standing on the table". The untranslated text may be further a text according to language "1".

In an operation S3, the database may be accessed for retrieving translation elements for the untranslated text of the same language, herein all related translation element of the language "1". The retrieving may involve a matching operating wherein the matching operation may result in exact matches or in fuzzy matches.

In an operation S5, the retrieved related elements may be received by the computer executing the user interaction interface. The matching quality value according to the formula $x = \frac{b_{common}}{a_{ste}} \cdot 100$ is determined of the received related translation elements.

In an operation S6, the untranslated text, the translation related elements is sequenced in a list by the user interaction interface according to the list 40 depicted in figure 7a. All retrieved entries are listed according to their matching quality.

In an operation S7, the user may select an entry of the presented list 40 shown in figure 7a. Since the second list entry may have assigned a quality of 100%, the untranslated text and the translating related element match exactly. Due to the matching quality the user may select the second entry of the list, indicated by the bold surrounding lines according to the depicted list 40 in figure 7a.

In an operation S9, the translation of the translation related element selected in operation S7 may be retrieved from the database. For retrieving the respective key-ID of the selected translation related element may be used. The retrieved translation may be a translation of the selected translation related element into the language "49".

In an operation S11, The translation of language "49" of the selected translation related element may be received by the user interactive interface from the database. A list may be prepared presenting the untranslated text, the selected translation related element and the translation to the user desired language, herein a translation from the language "1" which is the language of the untranslated text to the language "49". The matching quality have been determined in operation S5 so that a new determination may be skipped. The matching quality value of the translation related element may be assigned to the corresponding retrieved translation since the determination of the above defined matching quality may be determined only in combination with text of the same language.

In an operation S12, the respective list comprising the key-ID, the language code, the corresponding element and the status or quality, respectively, may be presented in a list illustrated as list 42 in figure 7a.

In an operation S13, the user confirms the translation of the untranslated text by selecting the translation. The selection may be indicated by bold surrounding lines which is shown in list 42 in figure 7a.

Due to the fact that the matching quality of the untranslated text and the translation related element retrieved from the database shows a value of 100% the translation is an exact translation. The respective entry is available in the database such that no additional entry may have to be added to the translation database.

In an operation S14, the translation of the untranslated text has been done successfully and is finished. The user interactive interface may present the next untranslated text for translating the user and may start again with operation S1.

The shown example is related to a 100% matching translation. That means, that the exact translation of the untranslated text was found in the database. Therefore, no further database entries may have to be included in the database. The following figure 8a and figure 8b present an example of a non-exactly matching untranslated text involving the generation of a new database entry.

Figure 8a depicts another set of user interaction interfaces ("screenshots") according to another embodiment of the present invention. Figure 8a shows an example of how the present invention may be embodied on a computer device. The first screenshot 50 shows a screenshot of a computer program or device depicting all found matches in a matching range of 66% down to 61%. The screenshot 50 comprises four columns. As in figure 7a, the first column represents a key ID of the text element (sentence) in the text. The second column represents the language of the text element entry. The third column represents the source text element and database text elements entries. To simplify the decision which of the pretranslation table entries are matching the source text element most, the pre-translation entries are shown in the source language, and therefore all entries in the language column are "1". Similar to figure 7a, the fourth column can represent two kinds of information. In the case of a source text element the fourth column represents a status. The status of the source text element in the screenshot 50 is "untranslated". In the case of pretranslation entries (line 2 to 3) the fourth column represents a "Quality" value, indicating how exact the source language entry in the pretranslation table matches the source text element.

The depicted percentage values are determined according to the same formula as in figure 7a. The formula used in figure 7a may be modified by replacing $a_{ste}$ by $a_{dte}$ representing the number of characters of the database text element. It should be noted that the formula is not limited to the use of characters, but can be applied e.g. to words, sentences and the like too. The formula may also comprise other terms using grammar structure related values to characterize the matching. In difference to figure 7a the retrieved translation suggestions reaches a maximum match of only 66%. The closest source text entry in the table is marked with a bold frame.

With a selection of the bold frame by user input, the system depicts the screenshot 52. The screenshot 52 depicts in the first line the source text element, in the second line the retrieved database text entry and in the third line the translation of the database entry. As the system can detect the and mark the differences between the source text element and the database entry, the system can be able to mark the differences in the translation of the database entry. All marked elements are depicted bold, italic, and with a small frame in the figure.

Next the user may edit the translation entry pretranslation table in an additional operation, e.g. by keyboard input or the like. Advanced systems may even utilize voice recognition algorithms. In the present pretranslation table the user accepted the proposed translation by a user input.

By accepting the proposed translation matching only 66% with the source text element, the system only translates the matching part of the source text element. The screenshot 54 represents a partially translated element in the pretranslation table. The table 54 may further depict the source text element and the retrieved database entry translation. In the first column the table depicts the key ID "1" of the source text element. In the second column the table depicts no entry, as a partially translated sentence can hardly be related to a single language. The entry in the second column can be "1", or "1-49" as part of the text element still is untranslated. In the third column the partially translated text is depicted, with a bold, italic underlined untranslated part depicted in capitals. The untranslated sentence is surrounded by a dotted bold frame to indicate that the present state of the sentence requires additional processing.

To reach the next operation, the user may select another text element size to post-process the entry in the preprocessing table, or the user may first translate all other text elements and proceed then with a smaller text element.

The next screenshot 56 depicts a second translation stage with smaller text elements. In this stage the text elements are words and/or word/article combinations. The present table depicts in the first column a newly generated key ID 127, to distinguish the different stages of the translation algorithm. In the second column first line, the language ID has not been changed, as the sentence is still only partially translated, while in the second line the retrieved database entry is marked with a "1" and in the third line the translation suggestion is marked as the target language with a "49". In the third column the untranslated part is of the sentence is marked as in table 54, its related database entry and its translation suggestion retrieved from a translation database.

With a user input accepting the proposed translation, the depicted table changes to table 58, containing only one line: In the first field, the key ID of the source text element (in this case the sentence), in the second field the language ID "49", in the third field the translated text element, and finally in the fourth field the status indicating "fully translated".

With the operation of accepting the suggested translation proposal, the system generates a new database entry 60 containing the source text element and the accepted translation. To retrieve the pair simple and fast, the entries comprise key IDs, language IDs. The new database entry is not necessarily depicted, as the storage operation can be executed automatically.

It should be noted that the translation database may comprise different 100% matching database entries, due to different equivocal translations.

Figure 8b illustrates schematically a flow diagram according to the user interaction shown in figure 8a. The untranslated text may be the same as shown in figure 8a and references to figure 8a will be made in order to complete the flow diagram of figure 8b. Figure 8b illustrates the operations of the user iterative interface with respect to the example presented in figure 8a.

In an operation S20, an untranslated text may be processed. The text may be "The computer is standing on the table". The untranslated text may be further a text according to language "1".

In an operation S22, the database may be accessed for retrieving translation elements for the untranslated text of the same language, herein all related translation element of the language "1". The retrieving may involve a matching operating wherein the matching operation may result in exact matches or in fuzzy matches.

In an operation S24, the retrieved related elements may be received by the computer executing the user interaction interface. The matching quality value according to the formula $x = \frac{b_{common}}{a_{ste}} \cdot 100$ is determined of the received related translation elements.

In an operation S25, the untranslated text, the translation related elements is sequenced in a list by the user interaction interface according to the list 50 depicted in figure 8a. All retrieved entries are listed according to their matching quality. The list may present the key-ID, the language the untranslated text or the translation related elements, respectively, and the matching quality. The non-fitting text parts of the translation related elements in relation to the untranslated text may be indicated by italic characters.

In an operation S26, the user may select an entry of the presented list 50 shown in figure 8a. In this example no entry of the list shows a matching quality of 100% indicating that no exact match was retrieved from the database. The second entry of list 50 shown in figure 8a may have a matching quality value of 66%. The user may select the best matching entry, herein the second list entry which may be indicated by bold surrounding lines.

In an operation S28, the translation of the translation related element selected in operation S26 may be retrieved from the database. For retrieving the respective key-ID of the selected translation related element may be use. The retrieved translation may be a translation of the selected translation related element to the language "49".

In an operation S30, the translation of language "49" of the selected translation related element may be received by the user interactive interface from the database. A list may be prepared presenting the untranslated text, the selected translation related element and the translation to the user desired language, herein a translation from the language "1" which is the language of the untranslated text to the language "49". The matching quality have been determined in operation S24 so that a new determination may be skipped. The matching quality value of the translation related element may be assigned to the corresponding retrieved translation since the determination of the above defined matching quality may be determined only in combination with text of the same language.

In an operation S31, the respective list comprising the key-ID, the language code, the corresponding element and the status or quality, respectively, may be presented in a list illustrated as list 52 in figure 8a. The non-fitting text parts of the translation related elements in relation to the untranslated text may be indicated by italic characters.

In an operation S32, the user confirms the translation of the untranslated text by selecting the translation. The selection may be indicated by bold surrounding lines which is shown in list 52 in figure 8a.

In an operation S33, due to the fact that no exact matching translation related element was found in the database a mixed language translation result may be presented to the user by the user interactive interface. This can be seen in list 54 shown in figure 8b. The text "The computer" may have not been translated. But the remaining part of the sentence may have been translated by the above performed operations.

In an operation S34, the user may select the untranslated text part for further translation. This can be seen in list 54 shown in figure 8a.

The translation may be further continued by trying to translate a not translated text part, defining this part as a untranslated text and performing translation operations according to the operation described above. The untranslated text "The computer" of the language "1" may be operated in the following steps.

In an operation S35, a translation related element according to the untranslated text part may be retrieved from the database. The retrieving may involve a matching operating wherein the matching operation may result in exact matches or in fuzzy matches. The translation related elements of the language "1" according to the untranslated text part are searched.

The retrieving of translation related elements with respect to the untranslated text part may only return a single matching translation related element. In this case, the respective translation (language "49") may be also automatically retrieved from the database since no further translation related elements may be presented to the user for selecting.

In an operation S37, due to the retrieving of the translation related element and the translation into the language "49" thereof a list of the partially translated text, the translation related element according to the untranslated text part and the translation may be prepared. The matching quality value may be determined. The determining of the quality may be derived in respect to the untranslated text part and the retrieved translation related element. The translation may have assigned the same matching quality value.

To indicate the new translation operation with respect to the untranslated text part, a new key-ID may be assigned to the list entries. According to list 56 shown in figure 8b, the key-ID may be "127".

In an operation S38, the list of the partially untranslated text, the retrieved translation related element and the translation (language "49") may be shown to the user. The respective list can be seen in list 56 shown in figure 8a. The partially translated text may have assigned no language ID. A status information of the partially translated text may indicate a percentage value according to the translated text part.

In an operation S39, the user may select the second list entry of the list 56 shown in figure 8b. The selection may be indicated by bold surrounding lines.

In an operation S40, the combination of the two independent translation operations of the untranslated text of operation S20 may lead to the complete translation thereof. The complete translation may be presented by the user interactive interface to the user. The key-ID of the translation may show the former key-ID value of operation S31. The status information indicates the successful translation. The respective list 58 is shown in figure 8a.

In an operation S42, since the untranslated text was not found in the database a new database entry may be generated. The contents of the new database entry is shown in list 60 of figure 8b. The key-ID may be given by an available key-ID of the database and may be generated automatically as a result of the generation of the database entry. The user interactive interface may present the next untranslated text for translating the user and may start again with operation S20.

A new entry may have been generated for the untranslated text presented in operation S20. Further occurrence of this untranslated text may lead to the retrieving of a translation related element of a matching quality value of 100%. The operations of the user interactive interface in case of exact matches are above described in detail in figure 7a and figure 7b.

The continuos adding of new database entries according to the presented embodiment of the invention may ensure that untranslated text is translated in the same manner to the respective translation language preventing the usage of synonyms or synonym text constructions which may irritate and confuse a reader of the translated text.

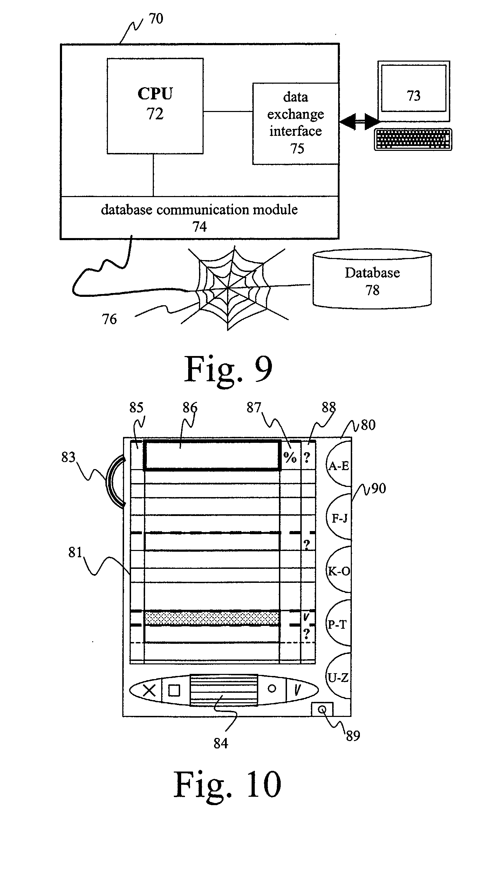

Figure 9 depicts an apparatus for translating texts according to another embodiment of the present invention by means of a database and a database management system, comprising

- a module 74 to communicate with a database 78,
- a module 75 for exchanging data,
- processing device 72 for retrieving elements from a database.

There is also depicted a realization of the apparatus 70 according to one embodiment of the present invention. The apparatus 70 is connected via a communication module 74 to a network 76. Via the network 76 the apparatus 70 can communicate with other devices (not shown) e.g. to exchange data. The network 76 can be the internet, or any other wide area, or local area network. The communication module 74 is connected to a Central Processing Unit (CPU) 72, to execute the exchange and filtering of data. The CPU 72 is connected to a data exchange interface 75, e.g. a user interaction interface. The data exchange interface 75 can be connected to a keyboard and a display, or via a network to a terminal device to interact with a user. The database 78 contains the translation data to be accessed, via said communication module 74 and said network 76. To be able to translate texts in a correct way, the CPU 72 must be able to receive the source texts and to relate said source texts with the data stored in the database 78. The source texts may be received via the data exchange interface 75, or via the communication module 74 from the network 76. To simplify the reception of the source texts, the user interaction device 73, the database 78 may be incorporated in a single and maybe portable device (see figure 10).

Figure 10 depicts a sentence based electronic translation apparatus according to another embodiment of the present invention. The translation apparatus is embodied as an interactive electronic dictionary 80. The electronic dictionary can be an electronic book comprising a display 81 for depicting a pretranslation table containing, a source text, translation proposals, a translated text and translation related information. In the translation table the first column 85 represents a key ID, to identify every text element in the source text. The second column 86 contains source text elements and translation proposals. Third column 87 contains matching indices to indicate how similar the source text entry is to the source text element. The fourth column 88 contains status symbols to indicate if the source text element requires further processing or translating. The user can interact with the dictionary by a scroll wheel 83, keys, a scroll roll 84 and thumb index menu keys 90. A user can e.g. pre-select a character or source text element with the thumb index 90, scroll the alphabet or the source text elements with the scroll wheel 83, and select translation proposals with the keys and the scroll roll 84. The electronic dictionary can further contain an interface 89 to communicate with e.g. a network to update its database or exchange data with another database. The dictionary may further upload new source texts via the interface 89, or print translated texts on a printer connected to the interface. The electronic dictionary (ED) may further comprise a built in scanner to recognize source texts autonomously. The dictionary may further comprise an extension slot, to connect the ED with handheld scanners, mobile communication devices, wireless networks and the like. So the ED may be used as a translation device for custom officers, to translate foreign bills of loading. The ED 80 may also be used as a conventional electronic book. An electronic book application has the advantage that users may read a book in its original language, with the option to translate single sentences.

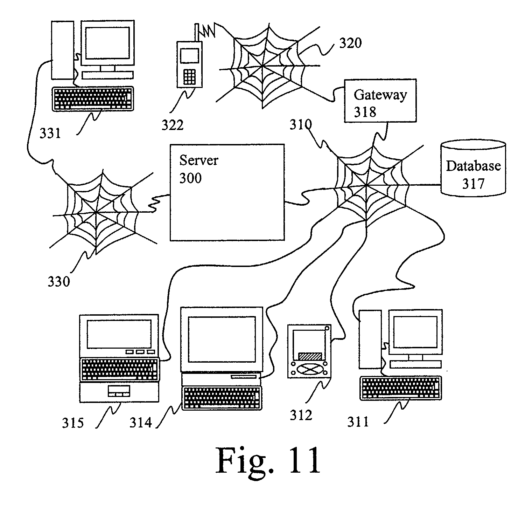

Figure 12 depicts a network system with an apparatus as described in figure 10 or 11 and at least one database 317. The apparatus can be a server 300 or client devices 311-316, 322, 331. The database can be the database 317, or any other database integrated in one of the client devices 311-316, 322, 331 or the server 300. The client devices are connected via networks 310, 330, 320 to the server 300. It is assumed that the server 300 contains an internal database (not shown) or can at least access an external database 317 or a database in one of the client devices 311-317, 322, 331. In the figure the server is directly connected to two networks, a local area network (LAN) 330 and a wide area network (WAN) 310. In the LAN 330 only one client is depicted, the personal computer 331. The WAN 310 is connected to a personal computer 311, a personal digital assistant (PDA) 312, a browser 314, laptop 315, a database 317 and a gateway 318 to a communication network 320. The gateway 318 indirectly connects a communication device 322, e.g. a mobile telephone with computation abilities with the server 300. So all the client devices 311-317, 322, 331 are connected to the server 300.

All client devices may comprise user interfaces, CPUs and memories or even databases. To execute the method according to the invention the client devices 311-317, 322, 331 and/or the sever 300 are enabled to access a translation database. Thereby, the exact location of the translation database is not important. So the database 317 may comprise the translation database and offer the client devices 311-317, 322, 331 to access the stored translation elements. Or each client device 311-317, 322, 331 comprises its own translation database enabling them to translate text elements received from an internal or remote device. The method according to the invention is executable as long as a translation database is accessible, e.g. via the networks 310, 320, 330. In the simplest case the client devices 311-317, 322, 331 themselves contain a translation database. In the simplest case the client devices are autonomous software localizing devices being connected to the network only to access new software to be localized. A very complex case would be to access a database 317 via a server 300 which is accessing distinct databases to retrieve text elements to be translated.

As the data of the database are usually retrieved by a database management system (DBMS) the data source may be able to use relational algorithms between tables. The DBMS can store the text elements e. g. in a directory table, and the translation elements in a related user specific translation table. So the data source of the DBMS may utilize relational algebra to interconnect said text elements with said translation elements. The DBMS user interface enables the user to translate text elements by accessing pre-translation tables. The translation elements can be selected and/or validated in each field of the pre-translation table by a user input. The user input can be a keyboard input, a mouse input and the like. In a last operation the validated text elements and validated translation elements are stored in the database, to be automatically retrieved if the user accesses the database with a DBMS to retrieve said text element next time.

According to another embodiment of the invention, an apparatus for localizing software by adapting the language of text contained in a source code of said software and an apparatus for localizing software related text by adapting the language of the text has following structural elements:

1) Apparatus for localizing software by adapting the language of text contained in a source code of said software, comprising:

- a code section containing instructions for extracting text elements from said source code,
- a code section containing instructions for searching untranslated elements of said extracted text elements,
- a code section containing instructions for retrieving translation elements for each untranslated test element and
- a code section containing instructions for associating said untranslated elements of said source code with said retrieved translation elements.

2) Apparatus according to 1) further comprising:

- a code section containing instructions for validating said retrieved translation elements and
- a code section containing instructions for merging said source code with said validated translation elements.

3) Apparatus according to 1) or 2), further comprising:

- a code section containing instructions for compiling said merged source code.

4) Apparatus according to any one of 1) to 3), for adapting the language of text related to said software, further comprising:

- a code section containing instructions for searching untranslated elements of said software related text,
- a code section containing instructions for retrieving translation elements for each untranslated text element on the basis of the association of said retrieved source code translation elements and
- a code section containing instructions for associating said untranslated elements of the software related text with said retrieved translation elements.

5) Apparatus for localizing software related text by adapting the language of the text, comprising:

- a code section containing instructions for searching untranslated elements of said software related text,
- a code section containing instructions for retrieving translation elements for each untranslated text element and,
- a code section containing instructions for associating said untranslated elements of said text with said retrieved translation elements.

6) Apparatus according to any one of 1) to 5), wherein said code section containing instructions for associating is executed by a code section containing instructions for entering said retrieved translation elements into a table.

7) Apparatus according to any one of 1) to 6), wherein the code section containing instructions for retrieving translation elements comprises a code section containing instructions for comparing each untranslated text element with entries of a dictionary database.

8) Apparatus according to any one of 1) to 7), wherein said retrieved translation element is entered at the location of said untranslated text element or in proximity of said untranslated text element.

9) Apparatus according to any one of 1) to 8), further comprising:

- a code section containing instructions for displaying matching translation elements to a user and
- a code section containing instructions for accepting a user input indicating a validation of a specific matching translation element.

10) Apparatus according to any one of 1) to 9), further comprising a code section containing instructions for editing said received translation element, by user input, prior to said validation.

11) Apparatus according to any one of 7) to 10), wherein said code section containing instructions for entering operation comprises a code section containing instructions for updating said dictionary database with said validated translation element.

12) Apparatus according to any one of 7) to 11), wherein the code section containing instructions for retrieving comprises:

- a code section containing instructions for searching matching translation elements in said dictionary database and
- a code section containing instructions for generating an index, indicating the percentage of matching.

13) Apparatus according to 12), wherein said table is a pre-translation table and the number of entries in said pre-translation table at the location of an untranslated text element is related to said index which is provided for an untranslated element.

14) Apparatus according to 12) or 13), further comprising:

- accepting said translation element of said text element entry as a valid translation entry automatically, if said index indicates an exact match of said untranslated text element with said text element entry.

15) Apparatus according to any one of 1) to 14), further comprising a code section containing instructions for marking text elements as translated or untranslated or partially translated elements.

16) Apparatus according to any one of 1) to 15), wherein said text elements are words, sentences and/or texts.

17) Apparatus according to any one of 1) to 16), further comprising the a code section containing instructions for processing of text elements and translated text elements stored in said database to extract translation related information.

18) Apparatus according to any one of 1) to 17), further comprising a code section containing instructions for sorting said text elements.

While the present invention has been described in connection with the preferred embodiments thereof, it will be readily recognized by those skilled in the art that those embodiments are for exemplifying purposes only without limiting the spirit and the scope of the present invention.

**Claims**

1. Method for localizing software by adapting the language of text contained in a source code of said software, comprising the operations of:

   - extracting text elements from said source code;
   - searching untranslated elements of said extracted text elements;
   - retrieving translation elements for each untranslated text element;
   - associating said untranslated elements of the source code with said retrieved translation elements;

2. Method according to claim 1 further comprising the operations of

   - validating said retrieved translation elements;
   - merging said source code with said validated translation elements.

3. Method according to claim 1 or 2, further comprising the operation of:

   - compiling said merged source code.

4. Method according to any one of claims 1 to 3, for adapting the language of text related to said software, further comprising the operations of:

   - searching untranslated elements of said software related text,
   - retrieving translation elements for each untranslated text element on the basis of the association of said retrieved source code translation elements,
   - associating said untranslated elements of the software related text with said retrieved translation elements.

5. Method for localizing software related text by adapting the language of the text, comprising the operations of:

   - searching untranslated elements of said software related text,

- retrieving translation elements for each untranslated text element,

- associating said untranslated elements of said software related text with said retrieved translation elements.

**6.** Method according to any one of claims 1 to 5, wherein said associating is executed by entering said retrieved translation elements into a table.

**7.** Method according to any one of claims 1 to 6, wherein the operation of retrieving translation elements comprises the operation of comparing each untranslated text element with entries of a dictionary database.

**8.** Method according to any one of claims 1 to 7, wherein said retrieved translation element is entered at the location of said untranslated text element or in proximity of said untranslated text element.

**9.** Method according to any one of the preceding claims, further comprising:

- displaying matching translation elements to a user,

- waiting for user input indicating a validation of a specific matching translation element.

**10.** Method according to any one of the preceding claims, further comprising an operation of editing said received translation element, by user input, prior to said validation.

**11.** Method according to claim 7 to 10, wherein said entering operation comprises updating said dictionary database with said validated translation element.

**12.** Method according to any one of the claims 7 to 11, wherein said retrieving operation comprises the operation of searching matching translation elements in said dictionary database and further comprises the operation of:

- generating an index, indicating the percentage of matching.

**13.** Method according to claim 12, wherein said table is a pre-translation table and the number of entries in said pre-translation table at the location of an untranslated text element is related to said index which is provided for an untranslated element.

**14.** Method according to claims 12 or 13, further comprising the operation of:

- accepting said translation element of said text element entry as a valid translation entry automatically, if said index indicates an exact match of said untranslated text element with said text element entry.

**15.** Method according to any one of the preceding claims further comprising the operation of marking text elements as translated or untranslated or partially translated elements.

**16.** Method according to any one of the preceding claims, wherein said text elements are words, sentences and/or texts.

**17.** Method according to any one of the preceding claims, further comprising the processing of text elements and translated text elements stored in said database to extract translation related information.

**18.** Method according to any one of the preceding claims, further comprising the operation of sorting said text elements.

**19.** Software tool for enabling and supporting a user to localize software or software related texts by translating texts by means of a database, comprising program code portions for carrying out the operations of any one of claims 1 to 18 when said program is implemented in a computer program.

**20.** Computer program for enabling and supporting a user to localize software or software related texts by translating texts by means of a database, comprising program code section for carrying out the operations of any one of claims 1 to 18 when said program is run on a computer or a network device.

**21.** Computer program product for enabling and supporting a user to localize software or software related text by translating text elements by means of a database, wherein said computer program product is comprising program code sections stored on a computer readable medium for carrying out the method of any one of claims 1 to 18 when said program product is run on a computer or network device.

**22.** Apparatus for localizing software by adapting the language of text contained in a source code of said software, comprising:

- a component for extracting text elements from said source code;

- a component for searching untranslated elements of said extracted text elements;

- a component for retrieving translation elements for each untranslated test element;

- a component for associating said untranslated elements of said source code with said retrieved translation elements.

23. Apparatus for localizing software related text by adapting the language of the text, comprising:

- a component for searching untranslated elements of said software related text;
- a component for retrieving translation elements for each untranslated text element;
- a component for associating said untranslated elements of said text with said retrieved translation elements.

24. Apparatus for enabling and supporting a user to localize software and/or software related texts by translating text by means of a database, comprising

- a module to communicate with a database,
- an interface for exchanging data,
- a processing device for retrieving elements from a database, connected to said communication module and to said data exchange interface.

25. Apparatus according to claim 24, further comprising

- a dictionary database connected to said communication module.

26. Network system for enabling and/or supporting at least one user to localize software or software related text by translating text by mans of a database, comprising

- at least one apparatus according to one of claims 24-25;
- at least one translation database for exchanging data with said at least one apparatus.

Extracting text elements from a source code of a software  1

Searching untranslated elements of said extracted text elements  3

data-base  7

Retrieving translation elements for each untranslated text element  5

associating said untranslated text elements of said source code with said retrieved translation elements  9  15

## Fig.1a

source code  510

component for extracting  502

component for searching  504

component for retrieving  506

data-base  7

500

component for associating  508

## Fig. 1b

Start — 100

extract text elements
from source code — 102

extract text elements from
software related text — 122

Searching untranslated text
elements from said
extracted text elements — 104

Searching untranslated text
elements from said
extracted text elements — 124

Retrieving translation
elements for each
untranslated text element — 106

150

Retrieving translation
elements for each
untranslated text element — 126

Associating the translation
elements with the extracted
text elements — 108

Associating the translation
elements with the extracted
text elements — 128

Can translation element
be validated? — 110

request user
input of a
valid
translation
element — 116

Can translation element
be validated? — 130

No                          No

Yes                         Yes

merge validated
translation elements
with source code — 112

exchange software related
text elements with validated
translation elements — 132

compile merged source
code to a localized
software version — 114

End — 190

Fig.2

searching untranslated text elements in the software related text 2

data-base 6

retrieving translation elements for each untranslated text element 4

associating said untranslated text elements of said software related text with said retrieved translation elements 8

10

## Fig. 3a

software related text 610

component for searching 602

component for retrieving 604

data-base 6

component for associating 606

600

## Fig. 3b

Start — 10

Select text element type — 12

Searching for untranslated text element — 14

text element stored in database? — 16

No → Leave text element untranslated — 24

Yes

Enter all related translation entries from the database in a pre-translation table. — 18

Sort said entries according to a grade of matching — 20

Search next untranslated text element, and is an untranslated text element found — 22

Yes

No

Select a smaller text element — 27

Yes

Is there a smaller text element to be selected? — 26

No

End — 28

# Fig. 4

110, 130

116

```
Validating a translation
element as a matching
translation of a text
element by user input
```

112, 132

```
Generating a preliminary ID number
for the text element and its validated
matching translation element
```

200

```
Transferring said identified text and
translation element pair to said
database 150
```

202

```
Analyzing said text and translation
element pair to generate a new key
ID
```

204

```
Storing said element pair with said
newly generated key ID
```

206

# Fig. 5

| Key-ID | Language | Text | Synonym |
|--------|----------|------|---------|
| 1 | 1 | table | desk |
| 1 | 49 | Tisch | Schreibtisch |
| 2 | 1 | table | chart |
| 2 | 49 | Tabelle | Verzeichnis |
| 3 | 1 | table | board |
| 3 | 49 | Tafel | Brett |
| 4 | 1 | table | plain (geol.) |
| 4 | 49 | Plateau | Ebene |
| 5 | 1 | table | (opt.) |
| 5 | 49 | Bildebene | (opt.) |

# Fig. 6

| Key-ID | Language | Text | Status / Quality |
|--------|----------|------|------------------|
| 1 | 1 | The computer is standing on the table. | Untranslated |
| 1 | 1 | The computer is standing on the table. | 100% |
| 1 | 1 | The computer is standing on the table 2 | 97% |
| 1 | 1 | A computer is standing on the table. | 95% |
| 1 | 1 | A computer is standing on a table. | 84% |

Selecting the bold lined table element by user input.

| Key-ID | Language | Text | Status |
|--------|----------|------|--------|
| 1 | 1 | The computer is standing on the table. | Untranslated |
| 1 | 1 | The computer is standing on the table. | 100% |
| 1 | 49 | Der Computer steht auf dem Tisch. | 100% |

Selecting the bold lined table element by user input.

| Key-ID | Language | Text | Status |
|--------|----------|------|--------|
| 1 | 49 | Der Computer steht auf dem Tisch. | Fully translated |

# Fig. 7a

Fig. 7b

| Key-ID | Language | Text | Status / Quality |
|---|---|---|---|
| 1 | 1 | The computer is standing on the table. | Untranslated |
| 1 | 1 | *A* *keyboard* is standing on the table. | 66% |
| 1 | 1 | *There* *is* *a* *keyboard* standing on the table *?* | 61% |

Selecting the bold lined table element by user input.

| Key-ID | Language | Text | Status |
|---|---|---|---|
| 1 | 1 | The computer is standing on the table. | Untranslated |
| 1 | 1 | *A* *keyboard* is standing on the table. | 66% |
| 1 | 49 | *Eine* *Tastatur* steht auf dem Tisch. | 66% |

Editing the suggested translation by user input.

| Key-ID | Language | Text | Status |
|---|---|---|---|
| 1 | - | *THE* *COMPUTER* steht auf dem Tisch. | Partially Translated 66% |

Selecting the dotted bold lined table element for next smaller text elements by user input.

| Key-ID | Language | Text | Status |
|---|---|---|---|
| 127 | - | *THE* *COMPUTER* steht auf dem Tisch | Partially Translated 66% |
| 127 | 1 | The computer | 100% |
| 127 | 49 | Der Computer | 100% |

Accepting or editing the translation suggestion by user input

| Key-ID | Language | Text | Status |
|---|---|---|---|
| 1 | 49 | Der Computer steht auf dem Tisch. | Fully translated |

Transferring the new translations to the database

| Key-ID | Language | Text | Status |
|---|---|---|---|
| 114115 | 49 | Der Computer steht auf dem Tisch. | |
| 114115 | 1 | The computer is standing on the table. | |

# Fig. 8a

| user | computer | database |
|------|----------|----------|

S20 → untranslated text language 1 — retrieving → ↗S22 related elements (language 1)

S24 → preparing list and entries ← receiving

↗S26 selecting of an entry → S25 → showing list of related elements — retrieving → ↗S28 entry related element (language 49)

S30 → preparing list and entries ← receiving

↗S32 selecting of an entry → S31 → showing list of related element

↗S34 selecting of an entry → S33 → untraslated part language 1 — retrieving → ↗S35 related elements (language 1, 49)

S37 → preparing list and entries ← receiving

↗S39 selecting of an entry → S38 → showing list of related element

S40 → translated text — transmit → ↗S42 new entry

↓ time

Fig. 8b

EP 1 315 084 A1

Fig. 9

Fig. 10

Fig. 11

## EUROPEAN SEARCH REPORT

**European Patent Office**

| Application Number |
|---|
| EP 01 12 8179 |

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 678 039 A (LOK JAMES SHIAN HWA ET AL) 14 October 1997 (1997-10-14)<br>* abstract * | 1-3,5-7, 17-23 | G06F9/44<br>G06F17/28 |
| Y | * page 34, left-hand column, line 23 – line 39 *<br>* page 36, left-hand column, line 14 – line 21 *<br>* page 36, left-hand column, line 29 – line 33 *<br>* page 36, right-hand column, line 6 – line 16 *<br>* page 36, right-hand column, line 24 – line 25 *<br><br>——— <br>-/-- | 4,8-16 | |
| | | | **TECHNICAL FIELDS SEARCHED (Int.Cl.7)**<br><br>G06F |

The present search report has been drawn up for all claims

| Place of search | Date of completion of the search | Examiner |
|---|---|---|
| MUNICH | 5 April 2002 | Müller, T |

EPO FORM 1503 03.82 (P04C01)

**European Patent Office**

## EUROPEAN SEARCH REPORT

Application Number

EP 01 12 8179

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PIPERIDIS S: "Interactive corpus-based translation drafting tool (Translearn)" ASLIB PROCEEDINGS, MARCH 1995, UK, vol. 47, no. 3, pages 83-92, XP002194694 ISSN: 0001-253X | 24-26 | |
| Y | * page 84, right-hand column, line 12 - line 39 * <br> * page 85, left-hand column, line 48 - right-hand column, line 2 * <br> * page 85, right-hand column, line 7 - line 9 * <br> * page 85, right-hand column, line 24 - line 25 * <br> * page 85, right-hand column, line 30 - line 33 * <br> * page 86, right-hand column, line 24 - page 87, left-hand column, line 9 * <br> * page 87, left-hand column, line 42 - line 51 * <br> * page 87, right-hand column, line 10 - line 20 * <br> * page 89, right-hand column, line 4 - line 11 * <br> * page 90, left-hand column, line 1 - right-hand column, line 10; figure 4 * <br> * page 91, right-hand column, line 16 - line 25 * <br> * page 91; figure 5 * <br> * page 92, left-hand column, line 2 - line 16 * <br> ----- | 4,8-16 | TECHNICAL FIELDS SEARCHED (Int.Cl.7) |

The present search report has been drawn up for all claims

| Place of search | Date of completion of the search | Examiner |
|---|---|---|
| MUNICH | 5 April 2002 | Müller, T |

EPO FORM 1503 03.82 (P04C01)

**ANNEX TO THE EUROPEAN SEARCH REPORT
ON EUROPEAN PATENT APPLICATION NO.**

EP 01 12 8179

This annex lists the patent family members relating to the patent documents cited in the above-mentioned European search report.
The members are as contained in the European Patent Office EDP file on
The European Patent Office is in no way liable for these particulars which are merely given for the purpose of information.

05-04-2002

| Patent document cited in search report | | Publication date | Patent family member(s) | Publication date |
|---|---|---|---|---|
| US 5678039 | A | 14-10-1997 | NONE | |

EPO FORM P0459

For more details about this annex : see Official Journal of the European Patent Office, No. 12/82